# EUROPEAN PATENT APPLICATION

(11) **EP 3 207 968 A1**
(43) Date of publication of application: **23.08.2017**
(21) Application number: 16159601.0
(22) Date of filing: 10.03.2016
(51) Int. Cl.: A63F 13/795, A63F 13/332, A63F 13/44, H04M 1/725, H04N 21/43, H04N 21/4788

(54) **INTERACTIVE SOCIAL REAL TIME MOVIE TRIVIA APP**

(30) Priority: 18.02.2016 US 201615046742
(71) Applicant: Knecht, Jr., William, Spring, Texas 77388 (US); Cooper, Scott, Miami, Florida 33139 (US)
(72) Inventor: Knecht, Jr., William, Spring, Texas 77388 (US); Cooper, Scott, Miami, Florida 33139 (US)
(74) Representative: Romano, Giuseppe

(57) **Abstract**

A computer implemented method and system for playing a real time synchronized pooled interactive trivia game which allows users to socialize while experiencing the watching of licensed media content be more social, competitive and interactive is disclosed. The method and system comprises of a web server that communicates between a user profile database and client devices via an interconnecting computer network, wherein a scheduling server establishes upon a user's request a schedule and participant list, wherein a media database for storing licensed media content communicates with a media server for providing the media content to the users and a gaming server in communication with the media server for providing parallel game play to the plurality of scheduled users simultaneously as they view the media content. The invention promotes a user to enjoy media content again and again, wherein each time the potential experience of watching the movie is different.

## Description

### FIELD OF THE INVENTION

The invention relates to a trivia game or entertainment system and generally to multiplayer gaming and more particularly to personalized multiplayer media trivia.

### BACKGROUND

Trivia games have been widely popular since the early days of radio and television. They are educational as well as entertaining wherein trivia games may be adapted for a plurality of uses. Various patents and non-patent documents illustrates various forms of trivia games for example, one has a question such as "What color is an ermine's fur in winter?" requires the proper answer as well as proper citation of an encyclopedia within a set time. The keeping of score also varies between trivia games and the wagering system of other games. Sometimes score is segmented into different stages. A wide variety of methods for playing trivia games have been invented which has a normal round and a speed round with time controls, a question and answer with assigned odds for each question so that the participants can wager on whether the responding player answers correctly.

Other trivia games allow partial credit that gives history questions with all answers in the form of the calendar year. Another trivia system has points related to correct identification of works and actors appearing in the works. Sometimes particular trivia games focus more narrowly on a particular subject matter, such as Star Trek trivia games which requires the skill of relating a quote with the year of the quote. Geography games provide an educational opportunity for learning state or territory trivia. Also, association of products with commercial slogans and trademarks has also been suggested. Thus, a wide variety of subject matter may be used for entertaining trivia depending upon one's point of view as to what constitutes entertaining trivia matter. Further, there are a wide variety of methods of tracking performance and progress within trivia games.

Also certain online/internet-based video systems are well known in the art. Such video systems include YouTube, which allows users to post video content that other users can "stream" from and provides a comment section beneath the video window for users to comment upon the video. Many other social and news sites having video operate in similar ways-Facebook, Hulu, and public media outlets such as NBC, CBS, Fox, etc., provide for video streaming and comments below by registered users. Such sites also provide the ability to "share" links to observed videos, such that someone on Facebook can share a video to another user's video stream via email. Public news media outlets typically provide "share" links whereby an observed video/news story can be "shared" to a user's social media circles via quick links to, e.g., Google+, Twitter, Facebook, LinkedIn, and Pinterest.

Other known internet video systems include those that provide videoconferencing, such as Google+ Hangouts, WebEx, and Skype. These types of systems typically provide for multi-user video interaction through live audio and video streamed from one user to multiple other users or in some cases from multiple users to multiple other users. These video systems typically also provide for chat interaction (text instant messaging ancillary to the video stream) from one user to multiple other users or to select other users. Other known systems provide downloading of copies of licensed media content. Systems like this include ParamountMovies.com, Amazon, Netflix, or the like. Through these sites, users can purchase and download licensed media content and then post notifications to other users' social media feeds that they have purchased/downloaded the indicated content.

Therefore, what is needed is a method and system that allows a plurality of users to play in real time synchronized an interactive trivia game associated with streaming media such as a movie. The method and system of the present invention provides this solution in a unique and novel fashion.

### BRIEF SUMMARY OF THE INVENTION

A computer implemented method and system for playing a real time synchronized pooled interactive trivia game which allows users to socialize during the watching of licensed media content like a movie, be more competitive and interactive is disclosed. The computer implemented method and system for playing the real time synchronized pooled interactive trivia game comprises of a web server that communicates between a user profile database and client devices via a interconnecting computer network. In response to a user's request for scheduling a multi-user interactive gaming experiencing of licensed media content, a scheduling server establishes a schedule and a participant list of a plurality of users, who while viewing the licensed media content, also participate in the interactive gaming experience. A media database which stores the licensed media content communicates with a media server that provides a licensed media stream to the plurality of scheduled user participants according to the schedule and the participant list. A gaming server in communication and synchronized with the media server provides parallel trivia game play to the plurality of scheduled user participants while they are simultaneously viewing the synchronized streaming media.

In another preferred embodiment, the trivia game is arranged with a plurality of users playing against each other over an interconnecting computer network (like the internet for example), wherein a starting point total for each user is calculated and shown on a user profile in addition to a sequence of trivia questions related to the licensed media content and previews of the licensed media content is presented to the users. The invention promotes a user to enjoy the media content again and again by offering a different sequence of trivia questions wherein each time the potential experience of watching the media content is made different by answering a new and different set of trivia questions against a pool of users.

In another preferred embodiment, the licensed media content is a movie stored on a media database which communicates with the media server for providing a media stream to the plurality of scheduled participants, wherein the scheduling server of the present invention communicates with both the web server and the user profile database to establish the schedule and the participant list of users pooled before they experience the movie and interactive game content. The schedule and user participant list are established prior to the users viewing of the movie and participating in the interactive trivia game content. Additionally, the media server operates to synchronize the playback for the plurality of user participants such that the users receive the movie and play the trivia game in a substantially synchronized manner.

In yet another preferred embodiment, the user participants have a fixed amount of time to read and respond to a question from the sequence of trivia questions related to the movie. Also, each user participant is provided with a means to upload their own personalized question on to the sequence of trivia questions for other users to answer in real time while synchronized to the licensed streaming media. A user earns reward points by providing a correct response to a question wherein the user with the highest point total wins at the end of the movie.

In still yet another preferred embodiment, each user starts by creating a unique set of login credentials to login into their user profile to play the real time synchronized pooled interactive trivia game of the present invention, wherein each user profile stores over time past game statistics for each user and may include within the user's profile data if they choose, the user's social network data.

### BRIEF DESCRIPTION OF THE DRAWINGS

These together with other objects of the present invention, along with the various features of novelty which characterize the invention, are pointed out with particularity in the disclosure. For a better understanding of the invention, its operating advantages and the specific objects attained by its uses, reference should be had to the accompanying drawings and descriptive matter in which there are illustrated preferred embodiments of the invention.
**FIGURE 1** illustrates the prospective view of the invention in a mobility environment identifying the different components of the invention and their workings, and
**FIGURE 2** illustrates a flowchart for one embodiment of a prospective workflow for the invention wherein trivia questions are synchronized to a licensed movie for gameplay.

### DETAILED DESCRIPTION OF THE PREFERRED EMBODIMENTS

The following is a detailed description of example embodiments of the invention depicted in the accompanying drawings. The example embodiments are in such detail as to clearly communicate the invention. However, the amount of detail offered is not intended to limit the anticipated variations of embodiments; but, on the contrary, the intention is to cover all modifications, equivalents, and alternatives falling within the spirit and scope of the present invention. The detailed descriptions below are designed to make such embodiments obvious to a person of ordinary skill in the art.

The present invention may be implemented on any communication device that has hardware components that can perform wireless and wired communication such as (but not limited to) - multi-purpose pocket computers, personal multimedia devices, etc. The various devices on which the applications that implement the present invention run may use one or more processors with different instruction-sets, architectures, clock-speeds, etc. and memory that may include high speed random access memory and may include non-volatile memory such as one or more magnetic disk storage devices, flash memory devices and other kinds of solid state memory devices.

The various applications that can implement the present invention run on electronic devices that may use at least one physical user interface device that provide the means of control and navigation within the operating system and applications that run on devices including touch-pads, touch screens, click wheel, mouse and gesture recognition means. Display means used by these devices may use LCD (liquid crystal display) technology, LED (light Emitting Diode) technology, CRT (Cathode ray tube) technology, or LPD (light emitting polymer) technology or any other display technologies. Various realizations of graphics display circuitry that implement a Graphics Processing Unit (GPU) are used to achieve video interface between user and these electronic devices. Connectivity of these devices with networks such as the internet, an intranet and/or wireless network such as cellular telephone network, a wired or wireless local area network (LAN) and/or metropolitan area network (MAN) and/or WAN (wide area network) and other wireless communication is achieved by use of a plurality of communication standards, protocols and technologies like Bluetooth, Wireless Fidelity (Wi-Fi) and/or any other suitable communication protocol.

The present invention maybe implemented on applications that run on a single or variety of operating system platforms including but not limited to OS X, WINDOWS, UNIX, IOS, ANDROID, SYMBIAN, LINUX, or embedded operating systems such as VxWorks. The present invention may also be implemented to work with various web browsers including but not limited to Internet Explorer, Mozilla Firefox, Safari and Opera that access and handle various types of web pages constructed with various mark- up languages such as HTML, HTML-5, XHTML, XML, etc. and the associated CSS (cascading style sheet) files and java-script files.

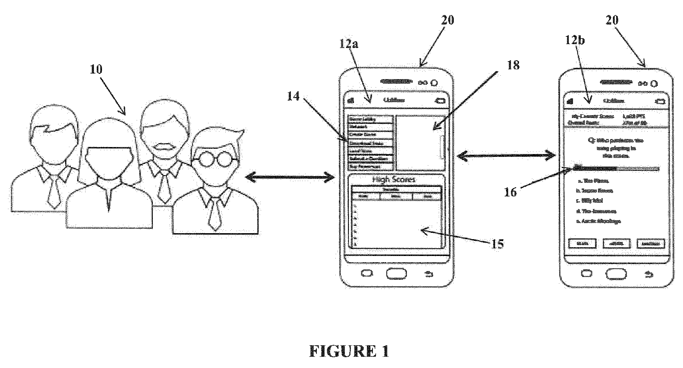

Referring now to **FIGURE 1****,** there are shown graphical user interfaces, **12a** and **12b** respectively, used in association with handheld devices **20** (by way of example, a smartphone) which enable users **10** with a method and system for playing a real time synchronized pooled interactive trivia game which allows the users **10** to socialize while at the same time watching synchronized licensed media content such as a movie, be more social, competitive and interactive. The present invention promotes user(s) **10** to enjoy the same media content again and again, wherein each time the potential experience of watching the movie is different, as will be more fully explained below. By way of example, but not of limitation, most people enjoy movies for what they are, so in order to enhance the overall movie-watching experience and make it fun, social, and interactive, a set of game trivia **14** that pertains to a certain movie (not shown) is synchronized to the movie and presented to the user participant(s) **10** like the movie Fight Club for example, so every user participant(s) **10** watching the movie Fight Club opens the trivia game, loads the Fight Club trivia set **14** where there could be several iterations of the trivia sets per movie is produced, so that everyone starts the game at a certain synchronized cue point in the movie (for example - the start of the opening credits or the title screen of the user profile). Next, a series of trivia questions appear at certain points/scenes synchronized throughout the movie and offered to the user participant (gamer) **10** whom will be alerted by haptic feedback that a new question is ready to be answered and scored.

In use, questions will relate to something or someone in a particular scene of the movie. For example, in the movie Fight Club there is a scene where the buildings are all exploding and there is a background tune playing simultaneous with the scene, wherein there might be a trivia question posted, "This song is performed by which popular band? a) The Pixies; b) Guns n Roses; c) Duran Duran; d)The Flaming Lips." However the questions could be about anything pertaining to scenes in the movie or information about specific actors and the like, which makes a user pay close attention to the movie in order to answer the questions and get the highest total score.

Users **10** can find gaming partners in a virtual "lobby" and the game can be shown to anyone who is connected to the same WIFI network as possible gamers to join the game. The game will display in screen **12b** a running score having a time based bar clock 16 for answering each question, wherein the user participant with the highest totaled score is the winner and is revealed at the end of the movie. There can be global high scores, regional, etc. The game may come with a few "free" trivia packs, but however the rest are in-app purchases. Also participating users **10** can even submit questions for review to receive credit for participating in the game. Lastly, on the first uploaded screen **12a** the historical data **15** may be displayed for each user **10** as well as a screen that displays fun movie facts or trailers of new movies yet to be released, as shown in **FIGURE 1****.**

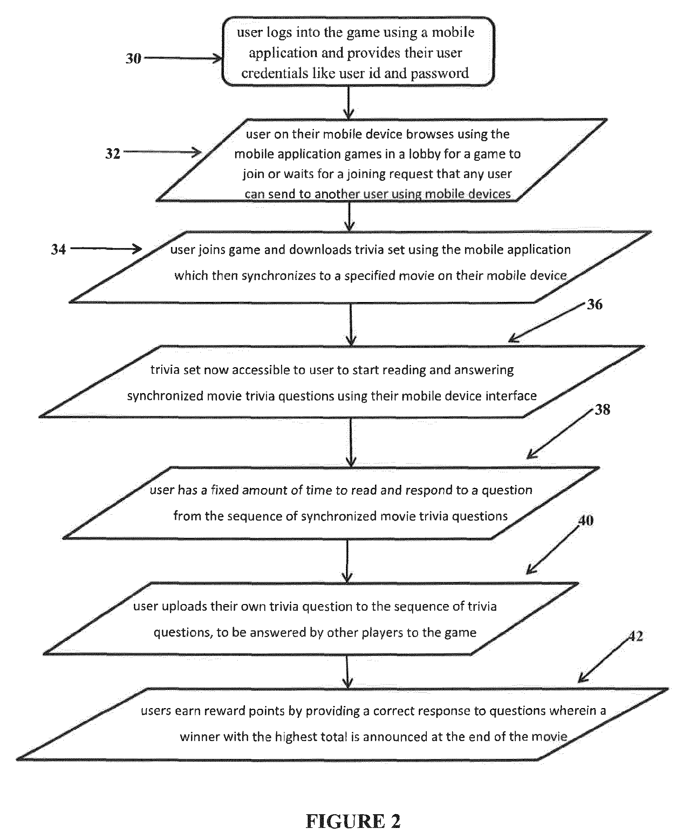

Referring now to **FIGURE 2****,** there is shown a flowchart of the user's actions in a computing environment, meaning the various steps or actions that a new user perform in the computing environment to play the trivia game while simultaneously watching a movie in accordance with present invention. It should be understood that the trivia questions are synchronized in real time to a licensed movie for gameplay by one or more users. First, a user logs into the game using a mobile application and provides their user credentials like user id and password **30.** Next, the user on their mobile device browses, using the mobile application, games in a lobby for a game to join or waits for a joining request that any user can send to another user using their mobile devices **32.** Once a user joins a game they download a trivia set on their mobile device **34,** allowing the synchronized movie trivia set to be accessible to the user to start reading and answering trivia questions using their mobile device interface **36.** It should be understood that the sequence of trivia questions are synchronized to a related chosen movie the user is watching, wherein the user has a fixed amount of time to read and respond to a question from the sequence of trivia questions **38.** Additionally, a user is provided with a means to upload their own trivia question to the sequence of trivia questions, to be answered for point value by other players to the game **40.** Finally, users earn reward points by providing a correct response to the questions wherein a winner with the highest total is announced at the end of the movie **42.**

## Claims

1. A computer implemented method of playing a real time synchronized pooled interactive trivia game related to a licensed media content, comprising:
a web server communicating between a database storing user profile data, and client devices via a interconnecting computer network;
a scheduling server responding to a user request to schedule a multi-user interactive gaming experiencing of licensed media content, establishing a schedule and a participant list with plurality of user pooled experiencing of licensed media content and interactive game content;
a media server in communication with a media database storing said licensed media content, providing a licensed media stream to plurality of scheduled user participants according to said schedule and said participant list established by said scheduling server;
a game server in communication with said media server, providing parallel game play to said plurality of scheduled user participants;
arranging a game with a plurality of users connected over said interconnecting computer network; assigning a starting point total for each users;
presenting a synchronized sequence of trivia questions in real time related to said licensed media content and previews of said licensed media content.

2. The computer implemented method of playing a real time synchronized pooled interactive trivia game related to a licensed media content as set forth in claim 1, wherein said media server is communicating with said scheduling server further in communication with said web server and said user database of user profile.

3. The computer implemented method of playing a real time synchronized pooled interactive trivia game related to a licensed media content as set forth in claim 1, wherein said schedule and said participant list are established prior to said multi-user pooled experiencing of licensed media content and interactive game content.

4. The computer implemented method of playing a real time synchronized pooled interactive trivia game related to licensed media content as set forth in claim 1, wherein said media server operates to synchronize playback for said multiple participants such that said multiple participants receive said licensed media stream in a substantially synchronized manner.

5. The computer implemented method of playing a real time synchronized pooled interactive trivia game related to licensed media content as set forth in claim 1, wherein said question of sequence of trivia question is synchronized and related to a movie.

6. The computer implemented method of playing a real time synchronized pooled interactive trivia game related to licensed media content as set forth in claim 1, wherein users have a fixed amount of time to read and respond to a question from said sequence of trivia question.

7. The computer implemented method of playing a real time synchronized pooled interactive trivia game related to licensed media content as set forth in claim 1, wherein a user is provided with a means to upload question on to said sequence of trivia question.

8. The computer implemented method of playing a real time synchronized pooled interactive trivia game related to licensed media content as set forth in claim 1, wherein the licensed media content is a movie.

9. The computer implemented method of playing a real time synchronized pooled interactive trivia game related to licensed media content as set forth in claim 1, wherein a user earns a reward points on providing a correct response to a question.

10. The computer implemented method of playing a real time synchronized pooled interactive trivia game related to licensed media content as set forth in claim 1, wherein said user has creates a unique set of login credential to login into a user profile to play said real time synchronized pooled interactive trivia game.

11. The computer implemented method of playing a real time synchronized pooled interactive trivia game related to licensed media content as set forth in claim 1, wherein said user profile contains game statistics of said user.

12. The computer implemented method of playing a real time synchronized pooled interactive trivia game related to licensed media content as set forth in claim 1, wherein said user profile data includes user social network data.
